# EUROPÄISCHE PATENTSCHRIFT

(11) **EP 2 823 254 B1**
(45) Veröffentlichungstag und Bekanntmachung des Hinweises auf die Patenterteilung: **19.06.2019**
(21) Anmeldenummer: 13703528.3
(22) Anmeldetag: 30.01.2013
(51) Int. Cl.: G01C 3/32

(54) **VERFAHREN ZUR BESTIMMUNG DES ABSTANDS ZWISCHEN EINER KAMERA UND EINEM OBJEKT, UND SYSTEM ZUR DURCHFÜHRUNG DES VERFAHRENS**
METHOD FOR DETERMINING THE DISTANCE BETWEEN A CAMERA AND AN OBJECT, AND SYSTEM FOR CARRYING OUT THE METHOD
PROCÉDÉ DE DÉTERMINATION DE LA DISTANCE ENTRE UNE CAMÉRA ET UN OBJET ET SYSTÈME PERMETTANT LA MISE EN UVRE DUDIT PROCÉDÉ

(30) Priorität: 06.03.2012 DE 102012004226
(43) Veröffentlichungstag der Anmeldung: 14.01.2015
(73) Patentinhaber: SEW-EURODRIVE GmbH & Co. KG, 76646 Bruchsal (DE)
(72) Erfinder: MALLIK, Quamrul, Hasan, 76139 Karlsruhe (DE); KAZAROV, Roman, 68309 Mannheim (DE); SLISKOVIC, Maja, 76275 Ettlingen (DE)
(86) Internationale Anmeldenummer: PCT/EP2013/000280
(87) Internationale Veröffentlichungsnummer: WO 2013/131603

(56) Entgegenhaltungen:
- US-A1- 2007 189 751
- US-A1- 2011 075 017

## Beschreibung

Die Erfindung betrifft ein Verfahren zur Bestimmung des Abstands, insbesondere der Gegenstandsweite, zwischen einer Kamera und einem Objekt, und ein System zur Durchführung des Verfahrens.

Es ist bei Abbildungen durch dünne optische Linsen allgemein bekannt, dass der Kehrwert der Brennweite der Summe der Kehrwerte von Gegenstandsweite und Bildweite entspricht.

Aus der US 2011/0075017 A1 ist ein portables Elektrogerät bekannt, bei dem eine Abstandsbestimmung mittels der Autofocusfunktion ausgeführt wird.

Aus der US 6 480 266 B2 ist ebenfalls eine Abstandsbestimmung mit einem optischen Verfahren bekannt.

Aus der US 2007/189751 A1 ist ein Verfahren zur Bestimmung des Abstandes mit einer Kamera mit einstellbarem Zoom und Fokus bekannt.

Aus der US 2011/075017 A1 ist ein Verfahren zum Bestimmen des Abstandes bekannt, wobei eine Look-Up-Tabelle bei gegebener Brennweite verwendet wird.

Der Erfindung liegt daher die Aufgabe zugrunde, ein Verfahren zur Bestimmung des Abstands weiterzubilden, wobei eine automatische Abstandsbestimmung schnell und einfach ausführbar sein soll.

Erfindungsgemäß wird die Aufgabe bei dem Verfahren zur Bestimmung des Abstands, insbesondere der Gegenstandsweite, zwischen einer Kamera und einem Objekt, mit den in Anspruch 1, und bei dem System zur Durchführung des Verfahrens mit den in Anspruch 7 angegebenen Merkmalen gelöst.

Von Vorteil ist dabei, dass nach dem Kalibrieren der Abstand in einfacher Weise bestimmbar ist, indem bei dem eingestellten Zoomwert, also Brennweitenwert des Objektivs, nur die Gegenstandsweite mittels der Autofocusfunktion verändert wird, so dass das Objekt scharf abgebildet wird auf den Bildsensor, insbesondere CCD-Sensor der Kamera.

Bei einer vorteilhaften Ausgestaltung wird das Referenzobjekt von der Kamera wegbewegt, insbesondere entlang einer Achse x bewegt, und der Abstand wird mittels eines optischen Abstandmessgeräts, insbesondere Laserentfernungsmessgerät ermittelt. Von Vorteil ist dabei, dass das Referenzobjekt in einfacher Weise an verschiedene Abstandspositionen anordenbar ist, und eine exakte Positionierung nicht notwendig ist. Denn für die Bestimmung des Abstands muss nur der Abstandswert aus dem Abstandsmessgerät ausgelesen werden.

Bei einer anderen vorteilhaften Ausgestaltung ist das Referenzobjekt jeweils eine projizierte Markierung, insbesondere eine von einer Lichtquelle projizierte Markierung. Von Vorteil ist dabei, dass das Referenzobjekt in einfacher Weise an verschiedene Abstandspositionen anordenbar ist. Denn es muss nur der Lichtstrahl der Lichtquelle an die entsprechende Position gelenkt werden.

Bei einer vorteilhaften Ausgestaltung wird beim Kalibrieren eine Interpolationsfunktion oder Interpolierende oder eine Approximationsfunktion bestimmt, welche die bei den jeweiligen Messungen bestimmten Tupel aus Zoomwert Z, Abstandswert und Focuswert F enthalten. Von Vorteil ist dabei, dass somit nach der Kalibrierung bei der Abstandsbestimmung auch Abstände bestimmbar sind, die zwischen den durch die Tupel dargestellten Messpunkten liegen. Es ist auch eine derartige Approximation ausführbar, dass außerhalb des für die Kalibrierung verwendeten Messbereichs liegende Punkte von der Approximationsfunktion umfasst sind.

Bei einer vorteilhaften Ausgestaltung ist das Objektiv derart gestaltet, dass der Zoomwert Z und der Focuswert F mittels eines jeweiligen elektromechanischen Aktors einstellbar ist, wobei die Aktoren von einem Rechner ansteuerbar sind. Von Vorteil ist dabei, dass ein automatisches Bestimmen ausführbar ist.

Bei einer vorteilhaften Ausgestaltung werden die Tupel als Look-Up-Tabelle gespeichert in einem nicht-flüchtigen Speicher, insbesondere des Rechners. Von Vorteil ist dabei, dass auch nach Ausfall der Stromversorgung die Kalibrierung weiter wirksam ist und somit ein nochmaliges Kalibrieren nicht ausgeführt werden muss.

Bei einer vorteilhaften Ausgestaltung werden die von der Kamera aufgenommenen Bilddaten einem Rechner zugeführt, der Steuersignale zur Einstellung des Zoomwertes Z und des Focuswertes F erzeugt,
insbesondere wobei die Steuersignale den Aktoren zugeführt werden. Von Vorteil ist dabei, dass die Bildauswertung und/oder die Bestimmung und Erzeugung der Ansteuersignale für die Aktoren, insbesondere für Focuswert-Einstellung und Zoom-Einstellung, im Rechner ausführbar sind.

Bei einer vorteilhaften Ausgestaltung umfasst der Rechner einen Mikroprozessor und/oder einen Microcontroller. Von Vorteil ist dabei, dass eine integrierte Rechnereinheit alle Rechenschritte in einem einzigen Bauteil ausführbar macht.

Bei einer vorteilhaften Ausgestaltung wird bei der Kalibrierung das schrittweise Erhöhen des Abstandes um einen jeweils äquidistanten Betrag ausgeführt. Erfindungsgemäß wird bei der Kalibrierung das schrittweise Erhöhen des Zoomwertes um einen jeweils äquidistanten Betrag ausgeführt. Von Vorteil ist dabei, dass ein besonders einfaches und schnelles Bestimmen des Abstandes ermöglicht ist.

Wichtige Merkmale bei dem System zur Durchführen eines vorgenannten Verfahrens sind, dass die Kamera mittels einer Datenaustauschverbindung mit dem Rechner verbunden ist, wobei der Zoomwert Z und der Focuswert F der Kamera mittels eines jeweiligen Aktors steuerbar ist.

Von Vorteil ist dabei, dass ein automatischer Kalibrierablauf ausführbar ist, wobei allerdings das Referenzobjekt auf verschiedene Abstandswerte zu bringen ist, was nur automatisiert ausführbar ist, wenn das Referenzobjekt von einem Aktor verschiebbar ist, der vom Rechner ansteuerbar ist.

Bei einer vorteilhaften Ausgestaltung weist das Objektiv eine Linsenanordnung auf, deren Abstand zu einem Bildsensor der Kamera einstellbar ist, also die Bildweite veränderlich ist. Von Vorteil ist dabei, dass ein Aktor die Linsenanordnung relativ zum Bildsensor verschiebbar ist.

Bei einer vorteilhaften Ausgestaltung weist das Objektiv eine Linsenanordnung auf, die aus mindestens zwei Linsen besteht, deren Beabstandung einstellbar ist, also die Brennweite des Objektivs veränderlich ist. Von Vorteil ist dabei, dass mittels eines weiteren Aktors die Linsen der Linsenanordnung relativ zueinander verschiebbar sind.

Bei einer vorteilhaften Ausgestaltung wird statt der Interpolationsfunktion oder Interpolierenden eine nach der allgemein bekannten Ausgleichsrechnung bestimmte Funktion nach der Methode der kleinsten Quadrate bestimmt.

Die Erfindung wird nun anhand von Abbildungen näher erläutert:
In der Figur 1 ist ein schematischer Aufbau eines erfindungsgemäßen Systems bei der Kalibrierung gezeigt.

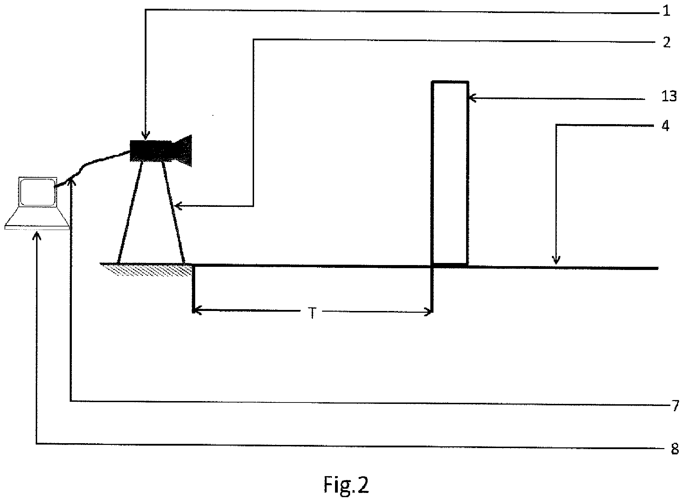

In der Figur 2 ist der schematische Aufbau des Systems bei der Entfernungsbestimmung gezeigt.

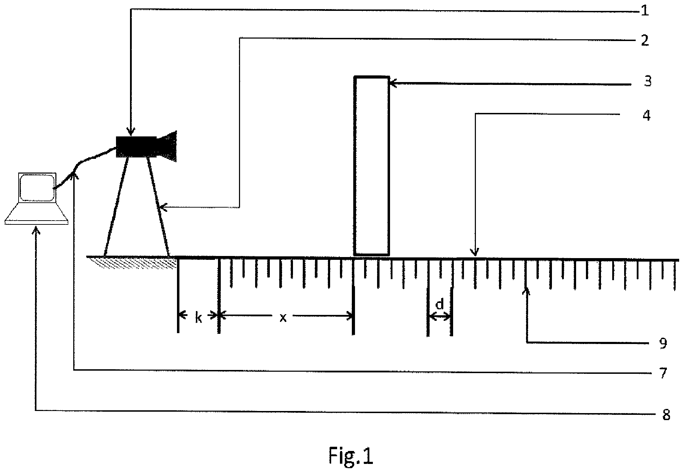

Wie in Figur 1 dargestellt, wird eine Kamera 1 auf einem Halteteil 2 befestigt, der auf einem Boden 4 angeordnet ist, und mittels einer Datenaustauschverbindung 7 mit einem Rechner 8 verbunden ist.

Zur Kalibrierung der Kamera wird ein Referenzobjekt 3 an einer ersten Position angeordnet, wo es einen Abstand k zur Kamera 1 aufweist.

Die Kamera weist ein Zoom-Objektiv auf, so dass die Brennweite des Objektivs veränderlich ist.

Dabei werden vom Rechner 8 Steuersignale über die Datenaustauschverbindung 7 übermittelt, die den Brennweitenwert Z zwischen einem Minimum, also minimalem Zoom, und einem Maximum, also maximalem Zoom, einstellbar macht.

Zu Beginn wird der Zoom Z auf sein Minimum eingestellt.

Des Weiteren ist ein Autofocus-System vorgesehen, so dass die Fokussierung des Referenzobjekts 3 automatisch erfolgt. Hierbei wird der Abstand zwischen dem Objektiv und dem lichtbildaufnehmenden Teil, insbesondere CCD-Sensor, auf denjenigen Wert hin geregelt, bei dem das vom lichtbildaufnehmenden Teil aufgenommene Bild des Referenzobjekts 3 scharf dargestellt ist.

Die zugehörigen Werte der Autofocus-Einstellung F, die im Wesentlichen der Bildweite entspricht, und des Zooms Z, der im Wesentlichen der Brennweite entspricht, werden zum zugehörigen Abstand k+x, der im Wesentlichen der Gegenstandsweite entspricht, gespeichert. Danach wird der Zoom Z schrittweise bis an sein Maximum erhöht und wiederum nach jeweils ausgeführter Scharfstellung des Bildes mittels Autofocus-Funktion das zugehörige Tupel, also Autofocus-Einstellung F, Zoom Z und Abstand k+x, jeweils gespeichert. Dabei k der Offset zwischen Kamera und Sklalenwert x. Der Skalenwert x ist zu Beginn beispielsweise auf einem Minimalwert.

In einem nächsten Verfahrensschritt wird das Referenzobjekt 3 um einen Differenzbetrag d weiter entfernt, so dass der Abstand zwischen Referenzobjekt 3 und Kamera 1 den Abstandswert k + d beträgt. Bei diesem neuen Abstandwert (k+d) wird wiederum mittels der Autofocus-Funktion die Bildweite derart verändert, dass das vom lichtbildaufnehmenden Teil aufgenommene Bild des Referenzobjekts 3 wiederum scharf dargestellt ist. Danach wird der Zoom schrittweise bis an sein Maximum erhöht, wobei wiederum bei jedem Zoomwert Z nach jeweils ausgeführter Scharfstellung des Bildes mittels Autofocus-Funktion das zugehörige Tupel, also Autofocus-Einstellung F, Zoom Z und Abstand K+d, jeweils gespeichert wird.

Diese Verfahrensschritte werden wiederholt, wobei bei der n-ten Wiederholung der Abstand k + d*n beträgt, wobei n die Verfahrensschritte nummeriert. Bei dem jeweiligen Abstandwert wird wiederum mittels der Autofocus-Funktion die Brennweite derart verändert, dass das vom lichtbildaufnehmenden Teil aufgenommene Bild des Referenzobjekts 3 wiederum scharf dargestellt ist. Bei jedem der Verfahrensschritte wird der Zoom schrittweise bis an sein Maximum erhöht und wiederum nach jeweils ausgeführter Scharfstellung des Bildes mittels Autofocus-Funktion das zugehörige Tupel, also Autofocus-Einstellung F, Zoom Z und Abstand (k + d*n), jeweils gespeichert.

Bei Erreichen eines maximalen Abstandes wird das Kalibrierverfahren beendet, wobei aus den gespeicherten Tupeln eine Interpolationsfunktion F(Z, Abstand) gebildet wird, die jedem Abstandswert und jedem Zoomwert Z eine Autofocus-Einstellung F zuordnet oder jedem Zoomwert und jedem Autofocus-Einstellungswert F einen Abstand. Vorzugsweise wird ein Chebyshev-Bivariate-Polynom verwendet. Alternativ wird eine Approximationsfunktion Abstand(Z, F) gebildet.

Nach beendeter Kalibrierung ist eine Abstandsbestimmung des Abstandes zwischen Kamera 1 und Objekt 13 ermöglicht, indem bei dem vorhandenen Zoomwert Z mittels der Autofocus-Funktion das abgebildete Bild scharfgestellt wird, wobei die Autofocus-Einstellung F bestimmt wird. Mittels der Interpolationsfunktion ist dann der Abstand bestimmbar.

Vorzugsweise wird der Zoomwert zu Beginn der Abstandsbestimmung auf einen derart großen Wert eingestellt, dass das Objekt 13 das Bild ausfüllt oder zumindest einen vorgebbaren Wert überschreitet. Denn bei größerem Zoomwert ist auch die Genauigkeit der Abstandsbestimmung erhöht.

Bei einem andere erfindungsgemäßen Ausführungsbeispiel wird beim Kalibrieren kein körperliches Referenzobjekt verwendet, sondern mittels einer Lichtquelle, insbesondere Laser-Lichtquelle, eine Markierung, wie Skalenstrich oder dergleichen, auf den Boden projiziert, wobei der Abstand zwischen der Kamera und der projizierten Markierung bekannt ist.

Bei einem weiteren erfindungsgemäßen Ausführungsbeispiel ist ein Objektiv ohne Zoom, also mit fester Brennweite, vorgesehen. Somit wird bei der Kalibrierung ein Zusammenhang zwischen Abstand und Focuswert bestimmt, der wiederum durch eine Interpolierende darstellbar ist.

Bei einem weiteren erfindungsgemäßen Ausführungsbeispiel ist ein Objektiv verwendet, dessen Scharfstellung, also Fokus, manuell einstellbar ist. Anstatt der in der vorstehenden Beschreibung genannten, vom Rechner 8 bewirkten Steuersignale wird eine manuelle Einstellung ausgeführt.

### Bezugszeichenliste

- 1: Kamera
- 2: Halteteil
- 3: Referenzobjekt
- 4: Boden
- 7: Datenaustauschverbindung
- 8: Rechner
- 9: Skala
- 13: Objekt

- T: Abstand zwischen Kamera 1 und Objekt 13
- d: Skalenteilung
- k: Abstandsversatz zur Skala 9
- x: Skalenwert

## Patentansprüche

1. Verfahren zur Bestimmung des Abstands, insbesondere der Gegenstandsweite, zwischen einer Kamera und einem Objekt,
wobei die Kamera ein Objektiv aufweist, dessen Zoom Z, insbesondere Brennweite, und Focus F, insbesondere Bildweite, einstellbar sind,
wobei
(i) in einem Kalibrierverfahren ein Referenzobjekt nacheinander an verschiedenen Abstandspositionen angeordnet wird, wobei jeweils das von der Kamera aufgenommene Bild bei verschiedenen Zoomwerten scharfgestellt wird, insbesondere also der Focus derart eingestellt wird, dass das Bild scharf abgebildet ist,
wobei der so bestimmte Focuswert F zusammen mit dem jeweils zugeordneten Paar von Abstandswert und Zoomwert Z gespeichert wird,
(ii) und dass bei der nach dem Kalibrierverfahren ausgeführten Abstandsbestimmung der Abstand zwischen Kamera und Objekt bestimmt wird, indem das von der Kamera bei einem Zoomwert Z aufgenommene Bild scharf gestellt wird und aus dem so bestimmten Focuswert F und dem Zoomwert Z der Abstandswert bestimmt wird,
wobei bei der Kalibrierung automatisch ein schrittweises Erhöhen des Abstandes der jeweiligen Abstandsposition durch einen von einem Rechner ansteuerbaren Aktor erfolgt
und wobei bei der Kalibrierung ein schrittweises Erhöhen des Zoomwertes um einen jeweils äquidistanten Betrag ausgeführt wird.

2. Verfahren nach Anspruch 1,
**dadurch gekennzeichnet, dass**
das Referenzobjekt jeweils eine projizierte Markierung ist, insbesondere eine von einer Lichtquelle projizierte Markierung.

3. Verfahren nach mindestens einem der vorangegangenen Ansprüche,
**dadurch gekennzeichnet, dass**
das Objektiv derart gestaltet ist, dass der Zoomwert Z und der Focuswert F mittels eines jeweiligen elektromechanischen Aktors einstellbar ist, wobei die Aktoren von dem Rechner ansteuerbar sind.

4. Verfahren nach mindestens einem der vorangegangenen Ansprüche,
**dadurch gekennzeichnet, dass**
beim Kalibrieren eine Interpolationsfunktion bestimmt wird, welche die bei den jeweiligen Messungen bestimmten Tupel aus Zoomwert Z, Abstandswert und Focuswert enthalten, oder dass
beim Kalibrieren eine nach Ausgleichsrechnung bestimmte Ausgleichsfunktion, insbesondere nach der Methode der kleinsten Quadrate, bestimmt wird, insbesondere wobei als Ausgleichsfunktion eine parametrierbare Funktion derart bestimmt wird, so dass die Parameter der Funktion auf diejenigen Werte festgelegt werden, bei denen die zu den bei den jeweiligen Messungen bestimmten Tupeln aus Zoomwert Z, Abstandswert und Focuswert, bestimmten Residuen und/oder deren Summe minimal sind.

5. Verfahren nach Anspruch 4,
**dadurch gekennzeichnet, dass**
die Tupel als Look-Up-Tabelle gespeichert werden in einem nicht-flüchtigen Speicher, insbesondere des Rechners.

6. Verfahren nach mindestens einem der vorangegangenen Ansprüche,
**dadurch gekennzeichnet, dass**
die von der Kamera aufgenommenen Bilddaten einem Rechner zugeführt werden, der Steuersignale zur Einstellung des Zoomwertes Z und des Focuswertes F erzeugt,
insbesondere wobei die Steuersignale Aktoren zugeführt werden.

7. System, ausgebildet zur Durchführung eines Verfahrens nach einem der vorangegangenen Ansprüche,
wobei das System
- eine Kamera mit Aktor, Objektiv und Bildsensor,
- einen weiteren Aktor und ein von dem weiteren Aktor verschiebbares Referenzobjekt,
- eine Datenaustauschverbindung und
- einen Rechner mit Speicher zur Speicherung eines Focuswertes F zusammen mit einem jeweils zugeordneten Paar von Abstandswert und Zoomwert Z
aufweist,
wobei die Kamera mittels der Datenaustauschverbindung mit dem Rechner verbunden ist, wobei der Zoomwert Z und der Focuswert F der Kamera mittels eines jeweiligen Aktors steuerbar ist.

8. System nach Anspruch 7,
**dadurch gekennzeichnet, dass**
das Objektiv eine Linsenanordnung aufweist, deren Abstand zu einem Bildsensor der Kamera einstellbar ist, also die Bildweite veränderlich ist.

9. System nach Anspruch 8 oder 7,
**dadurch gekennzeichnet, dass**
das Objektiv eine Linsenanordnung aufweist, die aus mindestens zwei Linsen besteht, deren Beabstandung einstellbar ist, also die Brennweite des Objektivs veränderlich ist.

## Claims

1. Method for determining the distance, in particular the object distance, between a camera and an object,
wherein the camera comprises an objective, of which the zoom Z, in particular the focal length, and focus F, in particular the image distance, are adjustable,
wherein
(i) during a calibration process, a reference object is arranged successively at different distance positions, wherein each image taken by the camera is focused at different zoom values, i.e. in particular the focus is adjusted such that the image is formed in sharp focus,
wherein the focus value F thus determined is stored together with the respective associated pair of distance value and zoom value Z,
(ii) and, during the distance determination carried out after the calibration process, the distance between the camera and the object is determined by focusing the image taken by the camera at a zoom value Z and determining the distance value from the focus value F thus determined and the zoom value Z,
wherein during calibration, the distance to each distance position is progressively increased by an actuator that can be actuated by a computer,
and wherein during calibration, the zoom value is progressively increased by an equidistant amount in each case.

2. Method according to claim 1,
**characterised in that**
each reference object is a projected mark, in particular a mark projected by a light source.

3. Method according to at least one of the preceding claims,
**characterised in that**
the objective is designed such that the zoom value Z and the focus value F can be adjusted by means of respective electromechanical actuators, wherein the actuators can be actuated by the computer.

4. Method according to at least one of the preceding claims,
**characterised in that**
during calibration, an interpolation function is determined containing the tuples, determined during the respective measurements, of the zoom value Z, distance value and focus value or **in that**
during calibration, a compensating function determined in accordance with a compensation calculation method, in particular in accordance with the least squares method, is determined, in particular wherein a configurable function is determined as the compensating function in such a way that the parameters of the function are set at the values at which the tuples, determined during the respective measurements, of the zoom value Z, distance value and focus value, certain residues and/or the sum thereof are minimal.

5. Method according to claim 4,
**characterised in that**
the tuples are stored as a look-up table in a non-volatile memory, in particular of the computer.

6. Method according to at least one of the preceding claims,
**characterised in that**
the image data recorded by the camera are supplied to a computer, which generates control signals for adjusting the zoom value Z and the focus value F,
in particular wherein the control signals are supplied to actuators.

7. System designed to carry out a method according to any of the preceding claims, wherein the system comprises
- a camera having an actuator, an objective and an image sensor,
- an additional actuator and a reference object that can be shifted by the additional actuator,
- a data exchange connection and
- a computer having a memory for storing a focus value F together with a respective associated pair of distance value and zoom value Z,
wherein
the camera is connected to the computer by means of the data exchange connection, wherein the zoom value Z and the focus value F of the camera can be controlled by means of respective actuators.

8. System according to claim 7,
**characterised in that**
the objective comprises a lens arrangement, the distance of which from an image sensor of the camera is adjustable, i.e. the image distance is variable.

9. System according to either claim 8 or claim 7,
**characterised in that**
the objective comprises a lens arrangement consisting of at least two lenses, the distance between which is adjustable, i.e. the focal length of the objective is variable.

## Revendications

1. Procédé pour déterminer la distance entre une caméra et un objet, en particulier la largeur dudit objet,
la caméra étant munie d'un objectif dont il est possible de régler le zoom Z, notamment la longueur focale, et le foyer F, notamment la largeur d'image,
sachant
(i) qu'un objet de référence est successivement disposé en des emplacements différemment distants, au cours d'un procédé d'étalonnage, l'image respectivement enregistrée par la caméra étant alors mise au point pour différentes valeurs de grossissement, c'est-à-dire que le foyer est notamment réglé de façon telle que ladite image soit reproduite avec netteté,
la valeur de focalisation F, ainsi déterminée, étant mémorisée conjointement à la paire respectivement associée, constituée d'une valeur de distance et d'une valeur de grossissement Z,
(ii) et que, lors de la détermination de distance effectuée suivant ledit procédé d'étalonnage, la distance entre la caméra et l'objet est déterminée par mise au point de l'image enregistrée par ladite caméra, pour une valeur de grossissement Z, et par détermination de ladite valeur de distance sur la base de la valeur de focalisation F ainsi déterminée, et de ladite valeur de grossissement Z,
un accroissement progressif de l'espacement de l'emplacement distant considéré ayant lieu automatiquement, au cours de l'étalonnage, par l'intermédiaire d'un actionneur pouvant être piloté par un ordinateur,
et un accroissement progressif de la valeur de grossissement, d'une grandeur respectivement équidistante, étant opéré au cours dudit étalonnage.

2. Procédé selon la revendication 1,
**caractérisé par le fait que**
l'objet de référence se présente à chaque fois comme un repère projeté, notamment un repère projeté par une source lumineuse.

3. Procédé selon au moins l'une des revendications précédentes,
**caractérisé par le fait que**
l'objectif est agencé de façon telle que la valeur de grossissement Z et la valeur de focalisation F puissent être réglées au moyen d'un actionneur électromécanique respectif, les actionneurs pouvant être pilotés par l'ordinateur.

4. Procédé selon au moins l'une des revendications précédentes,
**caractérisé par**
la détermination, au cours de l'étalonnage, d'une fonction d'interpolation qui renferme les tuples déterminés lors des mesures respectives, constitués d'une valeur de grossissement Z, d'une valeur de distance et d'une valeur de focalisation ;
ou par
la détermination, au cours de l'étalonnage, d'une fonction compensatrice déterminée d'après un calcul de compensation, en particulier d'après la méthode des moindres carrés, sachant notamment qu'une fonction paramétrable est déterminée en tant que fonction compensatrice, de telle manière que les paramètres de ladite fonction soient arrêtés sur les valeurs impliquant un minimum des valeurs résiduelles, et/ou de la somme de ces dernières, déterminée(s) par rapport aux tuples constitués d'une valeur de grossissement Z, d'une valeur de distance et d'une valeur de focalisation, déterminés lors des mesures respectives.

5. Procédé selon la revendication 4,
**caractérisé par le fait que**
les tuples sont mémorisés, sous la forme d'une table de consultation, dans une mémoire non volatile dont l'ordinateur est notamment équipé.

6. Procédé selon au moins l'une des revendications précédentes,
**caractérisé par le fait que**
les données d'images, enregistrées par la caméra, sont délivrées à un ordinateur engendrant des signaux de commande en vue du réglage de la valeur de grossissement Z et de la valeur de focalisation F.

7. Système dévolu à la mise en oeuvre d'un procédé conforme à l'une des revendications précédentes,
lequel système comprend
- une caméra équipée d'un actionneur, d'un objectif et d'un capteur d'images,
- un actionneur supplémentaire, et un objet de référence pouvant être déplacé par ledit actionneur supplémentaire,
- une connexion d'échange de données et
- un ordinateur muni d'une mémoire, en vue de la mémorisation d'une valeur de focalisation F conjointement à une paire respectivement associée, constituée d'une valeur de distance et d'une valeur de grossissement Z,
sachant que
la caméra est raccordée à l'ordinateur au moyen de la connexion d'échange de données, la valeur de grossissement Z et la valeur focalisation F de ladite caméra pouvant être commandées au moyen d'un actionneur respectif.

8. Système selon la revendication 7,
**caractérisé par le fait que**
l'objectif est pourvu d'un ensemble de lentilles dont la distance peut être réglée par rapport à un capteur d'images de la caméra, c'est-à-dire que la largeur d'image peut être modifiée.

9. Système selon la revendication 8 ou 7,
**caractérisé par le fait que**
l'objectif est pourvu d'un ensemble de lentilles comptant au moins deux lentilles dont l'espacement mutuel peut être réglé, c'est-à-dire que la longueur focale dudit objectif peut être modifiée.
